# EUROPÄISCHE PATENTSCHRIFT

(11) **EP 3 147 700 B1**
(45) Veröffentlichungstag und Bekanntmachung des Hinweises auf die Patenterteilung: **03.08.2022**
(21) Anmeldenummer: 16189008.2
(22) Anmeldetag: 15.09.2016
(51) Int. Cl.: G03B 17/17, G03B 37/00, H04N 5/369, G02B 27/10, G02B 27/12, G02B 27/14

(54) **VERFAHREN UND VORRICHTUNG ZUR VERGRÖSSERUNG DES SICHTFELDS EINER KAMERA SOWIE DAMIT AUSGESTATTETE KAMERA**
METHOD AND DEVICE TO INCREASE THE FIELD OF VIEW OF A CAMERA AND CAMERA PROVIDED THEREWITH
PROCEDE ET DISPOSITIF D'AGRANDISSEMENT DU CHAMP DE VISION D'UNE CAMERA ET CAMERA EN ETANT EQUIPEE

(30) Priorität: 22.09.2015 DE 102015218179
(43) Veröffentlichungstag der Anmeldung: 29.03.2017
(73) Patentinhaber: Fraunhofer-Gesellschaft zur Förderung der angewandten Forschung e.V., 80686 München (DE)
(72) Erfinder: WEDEL, André, 86161 Augsburg (DE); GEINITZ, Steffen, 70197 Stuttgart (DE); MARGRAF, Andreas, 86152 Augsburg (DE)
(74) Vertreter: Friese Goeden Patentanwälte PartGmbB

(56) Entgegenhaltungen:
- DE-A1- 1 522 286
- GB-A- 2 313 220
- US-A- 4 044 384
- US-A1- 2014 098 220
- US-A1- 2014 132 804

## Beschreibung

Die Erfindung betrifft eine Vorrichtung zur Vergrößerung des Sichtfelds einer Kamera eines Bildverarbeitungssystems, wobei die Kamera einen Bildsensor und ein Objektiv aufweist. Weiterhin betrifft die Erfindung eine Kamera eines Bildverarbeitungssystems sowie ein Verfahren zur Vergrößerung des Sichtfelds einer Kamera eines Bildverarbeitungssystems, wobei die Kamera einen Bildsensor und ein Objektiv aufweist. Die US 2014/0098220 A1 offenbart eine Bildverarbeitungssystemkamera und zugehörige Betriebsverfahren. Diese Anordnung tastet effektiv Objekte ab, die ein breites Sichtfeld erfordern, in der Größe variieren und sich relativ schnell in Bezug auf das Systemsichtfeld bewegen.

Aus der GB 2 313 220 A ist ein optisches System für einen optischen Zeichenleser bekannt, bei dem eine Kamera ein Bildfeld in einem Dokument liest. Das optische System enthält mindestens ein Paar Spiegel, die die Hälfte des Bildes sowohl seitlich als auch vertikal verschieben, um ein relativ langes Bild umzuwandeln, beispielsweise mit einem Seitenverhältnis von Höhe zu Länge von 1,5:8 in ein rechteckiges Bild mit einem viel niedrigeren Seitenverhältnis, beispielsweise 3:4.

Die US 2014/0132804 A1 offenbart eine Überwachungskamera.

Diese umfasst eine eine multidirektionale Abbildungseinheit, die eine Vielzahl von Sichtfeldern definiert, eine Sensoreinheit und eine Führungsoptik. Die multidirektionale Abbildungseinheit ist zum Sammeln einer Vielzahl von elektromagnetischen Strahlungsanteilen von einer Vielzahl von Szenen konfiguriert, wobei jede Szene mit einem jeweiligen FOV abgebildet wird.

Aus der US 8,646,690 B2 ist eine gattungsgemäße Vorrichtung bekannt. Dieses bekannte Bildverarbeitungssystem verwendet einen polygonalen, rotierenden Spiegel, welcher eine Folge von Bildern entlang der Breite des Objekts auf den Bildsensor wirft. Hierdurch entsteht eine Mehrzahl von Bildern, welche jeweils eine Teilfläche des Objekts enthalten und welche zu einem hochaufgelösten, zusammenhängenden Bild des Objekts zusammengefügt werden können.

Nachteilig an diesem bekannten Bildverarbeitungssystem ist jedoch der durch den rotierenden Spiegel verursachte mechanische Verschleiß und die durch den rotierenden Spiegel verursachten Vibrationen des Bildverarbeitungssystems, welche die Auflösung reduzieren können. Weiterhin treten geometrischen Verzerrungen und Parallaxenfehler aufgrund der während der Rotation wechselnden Abbildungseigenschaften des Systems auf.

Ausgehend vom Stand der Technik liegt der Erfindung somit die Aufgabe zugrunde, eine Vorrichtung und ein Verfahren zur Vergrößerung des Sichtfelds einer Kamera eines Bildverarbeitungssystems anzugeben, welches zuverlässig Aufnahmen hoher Qualität liefern kann.

Die Aufgabe wird erfindungsgemäß durch eine Vorrichtung gemäß Anspruch 1 und ein Verfahren gemäß Anspruch 10 gelöst. Vorteilhafte Weiterbildungen der Erfindung finden sich in den Unteransprüchen.

Erfindungsgemäß wird ein Bildverarbeitungssystem vorgeschlagen, welches in Fertigungs- oder Förderprozessen zum Zweck der Qualitätsanalyse, der Qualitätssicherung oder zur automatisierten Sortierung eingesetzt werden kann.

Hierzu ist es erforderlich, Aufnahmen der gefertigten bzw. geförderten Objekte bereitzustellen, welche nachfolgend in einem Computersystem analysiert werden können. Im Anschluss können mittels an sich bekannter Algorithmen beispielsweise Fertigungsfehler des Objekts erkannt werden oder auf dem Objekt befindliche ein- oder mehrdimensionale Barcodeetiketten können aus der Bildinformation extrahiert und ausgewertet werden. Bei einigen Prüfaufgaben der Qualitätsanalyse und/oder Qualitätssicherung, beispielsweise bei der Fertigung von kohlefaserverstärkten Kunststoffbauteilen, werden dabei hochauflösende Aufnahmen sehr großer Objekte benötigt. Die Auflösung kann beispielsweise besser sein als 100 µm, besser als 50 µm, besser als 10 µm oder besser als 5 µm. Der Messbereich kann in einigen Ausführungsformen der Erfindung größer sein als 50 cm, größer als 1 m, größer als 2 m oder größer als 3 m.

Erfindungsgemäß wird daher eine Vorrichtung zur Vergrößerung des Sichtfelds einer Kamera vorgeschlagen. Das Sichtfeld kann dabei so gewählt werden, dass dieses das gesamte zu prüfende Bauteil erfasst. In anderen Ausführungsformen der Erfindung kann das Sichtfeld einen zur Prüfung vorgesehenen Teilbereich des Bauteils erfassen oder das gesamte Bauteil, welches größer ist als das Sichtfeld einer einzigen Kamera, kann von mehreren Kameras erfasst werden bzw. durch sequentielle Aufnahmen einer Kamera können mehrere Teilbereiche des Bauteils erfasst werden, sodass die Prüfung des gesamten Bauteils ermöglicht wird.

Das zur Prüfung verwendete Bildverarbeitungssystem weist eine an sich bekannte Kamera mit einem Bildsensor und einem Objektiv auf. Der Bildsensor kann beispielsweise ein CCD-Sensor oder eine Bildverstärkerröhre sein. Der Bildsensor ist ein Zeilensensor, welcher mehrere, hintereinander in einer Reihe angeordnete Bildpunkte bzw. Pixel aufweist. Der Bildsensor kann ein Monochromsensor sein, welcher lediglich die Intensität in einem vorgebbaren Wellenlängenbereich erfasst. In anderen Ausführungsformen der Erfindung kann der Bildsensor ein Farbsensor sein, bei welchem jeder Bildpunkt bzw. jedes Pixel aus einer Mehrzahl von Subpixeln unterschiedlicher Farbinformation zusammengesetzt ist.

Weiterhin weist die Kamera ein Objektiv auf, welches aus einer Mehrzahl von Sammel- und/oder Zerstreuungslinsen aufgebaut ist. Das Objektiv kann in an sich bekannter Weise bewegbare Linsen oder Linsengruppen haben, um auf diese Weise die Brennweite und/oder die Schärfe einstellen zu können. Daneben kann die Kamera einen Verschluss und eine Steuerelektronik aufweisen, welche den Zeitpunkt der Bilderfassung und/oder die Belichtung steuert bzw. regelt.

Die Brennweite des Objektivs und die Größe des Bildsensors legen im Zusammenwirken einen Akzeptanzbereich der Kamera fest. Der Akzeptanzbereich kann auch durch Angabe des Bildwinkels des verwendeten Objektivs und des Abstands zum zu überprüfenden Objekt definiert werden.

Die erfindungsgemäße Vorrichtung ist nun dazu eingerichtet, das Sichtfeld der Kamera über den Akzeptanzbereich hinaus zu vergrößern. Hierzu verwendet die erfindungsgemäße Vorrichtung zumindest einen Strahlteiler, welcher dazu eingerichtet ist, eine erste Teilfläche des Sichtfelds über das Objektiv auf den Bildsensor abzubilden. Der Strahlteiler kann in einigen Ausführungsformen der Erfindung ein teildurchlässiger Spiegel, eine Strahlteilerplatte, ein Strahlteilerwürfel, ein Pellicle-, ein Polka-Dot- oder ein Prismenstrahlteiler sein, sodass ein Teil des vom Objektiv erfassten Lichts durch den Strahlteiler transmittiert wird und ein anderer Teil am Strahlteiler reflektiert wird. Auf diese Weise führt der Strahlteiler zwei optische Pfade zusammen, so dass jeweils die Bildinformation unterschiedlicher Teilflächen des Sichtfelds über das Objektiv auf den Bildsensor abgebildet wird.

Der am Strahlteiler reflektierte optische Pfad wird an einem weiteren Spiegel reflektiert, sodass beide optische Pfade in etwa parallel verlaufen und in etwa unter dem gleichen Winkel auf das zu erfassende Objekt auftreffen, wobei die über den ersten und zweiten optischen Pfad abgebildeten Teilflächen des Sichtfelds nebeneinander zu liegen kommen.

In einigen Ausführungsformen der Erfindung kann der Strahlteiler die optischen Pfade mit einer Intensität von etwa 10% zu etwa 90% bis etwa 50% zu etwa 50% trennen bzw. zusammenführen

In einigen Ausführungsformen der Erfindung können die ersten und zweiten Teilflächen des Sichtfelds überlappen, d. h. ein Teil des Sichtfelds wird sowohl in der ersten Teilfläche als auch in der zweiten Teilfläche dargestellt. Hierdurch kann die Zusammensetzung der Teilflächen zu einem Gesamtbild des Sichtfelds erleichtert sein.

Da beide Teilflächen in parallel verlaufenden optischen Pfaden auf den Bildsensor abgebildet werden, kommt es zu keinen oder nur zu geringen Verzerrungen, was einen Vorteil gegenüber bekannten Vorrichtungen darstellt, welche den optischen Pfad über bewegliche Spiegel ablenken. Aufgrund der fehlenden Verzerrungen kann die Qualität der mit der Kamera erfassten Bilder verbessert sein. Weiterhin kann in einigen Ausführungsformen der Erfindung eine aufwendige Nachbearbeitung zur Korrektur optischer Verzerrungen oder Parallaxenfehler unterbleiben.

In einigen Ausführungsformen der Erfindung kann das oben beschriebene Grundelement aus einem Strahlteiler und optional weiteren Spiegeln und/oder Linsen mehrfach hintereinander kaskadiert werden, sodass nach dem ersten Strahlteiler ein zweiter Strahlteiler und nach dem zweiten Strahlteiler ein dritter Strahlteiler angeordnet wird. Hierdurch können eine Vielzahl optischer Pfade erzeugt werden, welche jeweils eine Teilfläche des Sichtfelds erfassen. Somit lässt sich das Sichtfeld der Kamera des Bildverarbeitungssystems an die gewünschte Größe anpassen. Gleichzeitig bleibt die volle Auflösung des Bildsensors für die Aufnahme jeder einzelnen Teilfläche erhalten.

In einigen Ausführungsformen der Erfindung kann die erste Teilfläche des Sichtfelds auf der optischen Achse des Objektivs liegen. Somit muss der vom ersten Strahlteiler transmittierte optische Pfad nicht nochmals umgelenkt werden, sodass optische Komponenten eingespart werden können. Hierdurch kann die Qualität der optischen Abbildung verbessert sein.

In einigen Ausführungsformen der Erfindung enthält die Vorrichtung zumindest eine Blende, welche dazu eingerichtet ist, die Teilflächen des Sichtfelds sequentiell durch die Kamera zu erfassen. Durch zugeordnete Blenden in jedem optischen Pfad können die optischen Pfade einzeln unterbrochen bzw. geöffnet werden, um so eine sequentielle Erfassung der einzelnen Teilflächen durch die Kamera des Bildverarbeitungssystems zu ermöglichen.

In einigen Ausführungsformen der Erfindung kann die zumindest eine Blende ausgewählt sein aus einer rotierenden Schlitzscheibe und/oder einem Zentralverschluss und/oder einem Schlitzverschluss. Unter einem Zentralverschluss wird für die Zwecke der vorliegenden Erfindung eine Vorrichtung mit federenden, kurvenförmigen Lamellen verstanden, welche sich für die Dauer der Belichtung radial öffnen. Hierdurch kann der optische Pfad zeitweise freigegeben und zeitweise blockiert werden, um die Sicht auf die jeweilige Teilfläche des Sichtfelds für eine vorgebbare Zeit freizugeben.

Unter einem Schlitzverschluss wird für die Zwecke der vorliegenden Erfindung eine Vorrichtung mit einem doppelten Vorhang verstanden, mit welchem ein Schlitz variabler Breite erzeugt werden kann, welcher rasch durch den optischen Pfad bewegt wird. Dabei bestimmt die Breite des Schlitzes die Belichtungszeit, bzw. denjenigen Zeitraum, für welchen die jeweilige Teilfläche für die Kamera sichtbar ist.

In einigen Ausführungsformen der Erfindung weist jeder optische Pfad, welcher eine Teilfläche des Sichtfelds mit der Kamera verbindet, zumindest eine Linse bzw. ein Linsensystem auf. Hierdurch können unterschiedliche optische Weglängen der einzelnen optischen Pfade kompensiert werden, sodass jede Teilfläche scharf auf dem Bildsensor abgebildet werden kann.

In einigen Ausführungsformen der Erfindung kann im optischen Pfad einer jeden Teilfläche zumindest ein Filterelement angeordnet sein, welches Licht einer vorgebbaren Wellenlänge bzw. eine Wellenlängenbereichs transmittiert und/oder reflektiert. Dies erlaubt es, anhand der am Bildsensor erfassten Farbe das jeweilige Bild einer Teilfläche eindeutig zuzuordnen. Somit können mehrere Teilflächen im Wellenlängenmultiplex gleichzeitig vom Bildsensor erfasst werden. Hierdurch kann die zur Aufnahme des gesamten Sichtfelds benötigte Zeit und optional auch die Datenmenge reduziert werden.

In einigen Ausführungsformen der Erfindung kann das Filterelement ausgewählt sein aus einem Transmissionsfilter und/oder einem dichroitischen Spiegel. Die Verwendung dichroitischer Spiegel ist insoweit vorteilhaft, als diese eine Doppelfunktion zur Strahlumlenkung und Filterung ausführen können, sodass zusätzliche optische Komponenten eingespart werden können, welche eine nachteilige Wirkung auf die Bildqualität haben können und den Aufbau der erfindungsgemäßen Vorrichtung aufwändiger gestalten.

In einigen Ausführungsformen der Erfindung können die Filterelemente jeweils einen Bandpassfilter umfassen, dessen Transmissionswellenlängen in etwa der maximalen Sensitivität unterschiedlicher Subpixel des Bildsensors entsprechen. Auf diese Weise können die Bilder einzelner Teilflächen des Sichtfelds eindeutig einer Farbe bzw. einer Subpixelgruppe des Bildsensors zugeordnet werden. Hierdurch kann die Auswertung des mit dem Bildsensor erhaltenen Bilds des Sichtfelds erleichtert sein. Ein Bandpassfilter kann in einigen Ausführungsformen als Kombination eines Hochpassfilters und eines Tiefpassfilters aufgebaut sein.

In einigen Ausführungsformen der Erfindung können die Filterelemente einen Hochpassfilter oder einen Tiefpassfilter enthalten. Diese Ausführungsform ist insbesondere vorteilhaft, wenn am Bildsensor nur eine Aufteilung in zwei Spektralbereiche vorgenommen werden soll, beispielsweise zur Erfassung von zwei Teilflächen im Wellenlängenmultiplex.

In einigen Ausführungsformen der Erfindung kann das Sichtfeld etwa 2-mal bis etwa 10-mal größer sein als der Akzeptanzbereich der Kamera. In anderen Ausführungsformen der Erfindung kann das Sichtfeld etwa 3-mal bis etwa 5-mal größer sein als der Akzeptanzbereich. Dies erlaubt einerseits eine hinreichend rasche Erfassung aller Teilflächen des Sichtfelds. Darüber hinaus nimmt die Lichtstärke an den einzelnen, zur Aufteilung der optischen Pfade eingesetzten Strahlteilern nicht so stark ab, dass dies die Leistungsfähigkeit des Bildsensors der Kamera nachteilig beeinträchtigt.

Nachfolgend soll die Erfindung anhand von Figuren ohne Beschränkung des allgemeinen Erfindungsgedankens näher erläutert werden. Dabei zeigt
Figur 1 eine erste Ausführungsform der erfindungsgemäßen Vorrichtung.
Figur 2 zeigt eine zweite Ausführungsform der erfindungsgemäßen Vorrichtung.
Figur 3 zeigt eine dritte Ausführungsform der erfindungsgemäßen Vorrichtung.
Figur 4 zeigt eine vierte Ausführungsform der erfindungsgemäßen Vorrichtung.

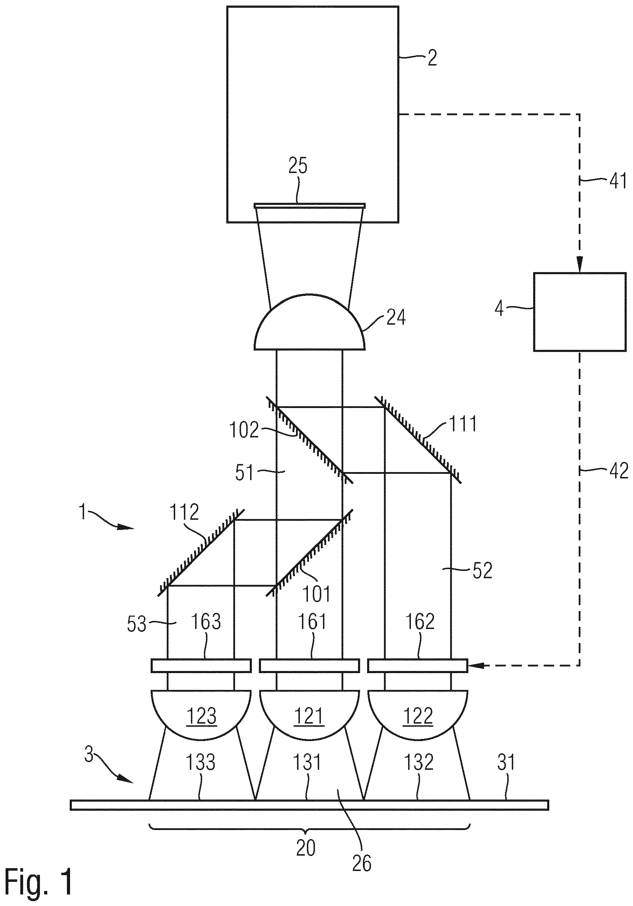

Figur 1 zeigt ein Blockschaltbild einer erfindungsgemäßen Vorrichtung zur Vergrößerung des Sichtfelds 20 einer Kamera 2.

Figur 1 zeigt eine Kamera 2, welche einen Bildsensor 25 enthält. Der Bildsensor 25 kann beispielsweise ein CCD-Sensor oder eine Bildverstärkerröhre oder ein Photodiodenarray sein oder ein solches enthalten. Der Bildsensor 25 kann ein Flächen- oder ein Zeilensensor sein. In jedem Fall stellt der Bildsensor 25 ein elektrisches Signal an seinem Ausgang zur Verfügung, welches das durch das Objektiv 24 einfallende Bild repräsentiert.

Darüber hinaus kann die Kamera 2 eine Steuer- oder Regeleinrichtung enthalten, welche den Verschluss der Kamera 2, die Belichtung, die Fokussierung des Objektivs 24 oder weitere Funktionen der Kamera 2 steuert. Weiterhin kann die Kamera 2 einen A/D-Wandler enthalten, sodass an einem nicht dargestellten Ausgang der Kamera 2 die Bildinformation als digitaler Datenstrom zur Verfügung gestellt wird.

Die Daten der Kamera 2 werden einer nicht dargestellten Auswerteeinrichtung zugeführt, welche beispielsweise mittels einer Software, welche auf einem Mikroprozessor ausgeführt wird, eine Auswertung der Bilder vornehmen. Auf diese Weise können beispielsweise Fehler des im Bild dargestellten Bauteils automatisch erkannt werden, wenn die Kamera 2 mit der Vorrichtung 1 zur Qualitätssicherung eingesetzt wird. In anderen Ausführungsformen der Erfindung kann im Kamerabild ein Barcode gesucht werden, um beispielsweise eine automatische Sortierung der erfassten Gegenstände vorzunehmen.

Dem Bildsensor 25 wird Licht, welches Bildinformation des zu erfassenden Objektes trägt, über ein Objektiv 24 zugeführt. Das Objektiv 24 ist so gestaltet, dass das eintreffende Bild in der Regel scharf auf den Bildsensor abgebildet wird.

Die Brennweite des Objektivs 24 und die Größe des Bildsensors 25 definieren zusammen den Akzeptanzbereich 26 der Kamera 2. Der Akzeptanzbereich ist diejenige Fläche, welche in einer einzigen Aufnahme ohne die erfindungsgemäße Vorrichtung 1 auf dem Bildsensor 25 abgebildet werden kann.

Erfindungsgemäß wird nun vorgeschlagen, zumindest einen Strahlteiler 101 oder 102 einzusetzen, um den objektseitigen Strahlengang des Objektivs 24 der Kamera 2 in mehrere optische Pfade 51, 52 und 53 mit parallelem Strahlenbündel bzw. in mehrere optische Pfade 51, 52 und 53 mit kollimiertem Licht aufzuteilen. Im dargestellten Ausführungsbeispiel gemäß Figur 1 sind zwei Strahlteiler 101 und 102 eingesetzt, um drei parallele optische Pfade 51, 52 und 53 zu erzeugen. In anderen Ausführungsformen der Erfindung kann die Anzahl der optischen Pfade größer oder geringer sein und beispielsweise zwischen 2 und 10 oder zwischen 3 und 5 betragen. Die Bilder der parallelen optischen Pfade 51, 52 und 53 können in einigen Ausführungsformen der Erfindung sequentiell im Zeitmultiplex vom Bildsensor 25 erfasst werden. In anderen Ausführungsformen der Erfindung können die Bilder der parallelen optischen Pfade 51, 52 und 53 zeitgleich in unterschiedlichen Spektralbereichen im Wellenlängenmultiplex erfasst werden.

Die Strahlteiler 101 und 102 enthalten jeweils einen teildurchlässigen Spiegel, welcher relativ zur optischen Achse des Objektivs 24 um einen vorgebbaren Winkel geneigt ist. Für die Zwecke der vorliegenden Erfindung soll die optische Achse eine gerade Linie bezeichnen, welche mit der Symmetrieachse zumindest eines reflektierenden oder brechenden optischen Elements des Objektivs 24 übereinstimmt. Dies führt dazu, dass ein Teil des Lichts durch die Strahlteiler transmittiert wird und ein Teil an den Oberflächen der Strahlteiler 101 bzw. 102 reflektiert wird. Die reflektieren Anteile werden über jeweils einen zugeordneten Spiegel, nämlich einen ersten Spiegel 111 und einen zweiten Spiegel 112 umgelenkt, sodass der optische Pfad in etwa parallel zur optischen Achse und damit auch in etwa parallel zum ersten optischen Pfad 51 verläuft.

Der seitliche Versatz der optischen Pfade 51, 52 und 53 ist so gewählt, dass auf der Oberfläche 31 eines Prüfkörpers 3 drei aneinandergrenzende bzw. überlappende Teilflächen 131, 132 und 133 entstehen, welche das Sichtfeld 20 definieren.

Unterschiedliche optische Weglängen der jeweiligen optischen Pfade 51, 52 und 53 können über zugeordnete Linsen 121, 122 und 123 kompensiert werden, sodass jede der Teilflächen 131, 132 und 133 des Sichtfelds 20 scharf auf dem Bildsensor 25 abgebildet wird. In einigen Ausführungsformen der Erfindung können die Linsen 121, 122 und 123 jeweils ein Achromatenpaar sein oder ein solches enthalten. Sofern auch das Objektiv 24 ein Achromatenpaar enthält, kann das Licht zwischen dem Ausgang jeder der Linsen 121, 122 und 123 und dem Eingang des Objektivs 24 kollimiert sein.

Weiterhin befinden sich im Strahlengang jeweils eine zugeordnete schaltbare Blende 161, 162 und 163. Jede dieser Blenden kann beispielsweise einen Zentralverschluss oder einen Schlitzverschluss aufweisen. Die Erfindung ist jedoch nicht auf diese Ausführungsbeispiele beschränkt. In anderen Ausführungsformen der Erfindung können andere schaltbare Blenden eingesetzt werden.

Die schaltbaren Blenden 161, 162 und 163 sind an einer Versorgungs- und Datenleitung 42 angeschlossen, welche ein Steuersignal einer Steuereinrichtung 4 an die Blenden 161, 162 und 163 überträgt. Hierdurch können die Blenden 161, 162 und 163 zyklisch angesteuert werden, sodass der Bildsensor 25 sequentiell jede zugeordnete Teilfläche 131, 132 und 133 erfasst. Aus den Bilddaten der einzelnen Teilflächen 131, 132 und 133 kann ein Bild des gesamten Sichtfelds 20 rekonstruiert werden. Da jede Teilfläche 131, 132 und 133 mit der vollen Auflösung des Bildsensors 25 erfasst wird, weist das Bild des Sichtfelds 20 eine höhere Auflösung auf, als dies beispielsweise durch Anpassen der Brennweite des Objektivs 24 allein möglich wäre.

Die Steuer- bzw. Regeleinrichtung 4 steuert in einigen Ausführungsformen über eine Datenleitung 41 zusätzlich die Kamera 2, sodass die Zeitpunkte der Bilderfassung der Kamera 2 mit den Schaltzeiten der Blenden 161, 162 und 163 koordiniert werden können. In anderen Ausführungsformen erhält die Steuer- bzw. Regeleinrichtung 4 von der Kamera 2 ein Triggersignal, um daraus ein Ansteuersignal für die die Blenden 161, 162 und 163 zu erzeugen. Hierzu kann die Steuer- oder Regeleinrichtung 4 beispielsweise einen Mikroprozessor, ein Mikrocontroller und/oder einen programmierbaren Logikbaustein enthalten. Die Steuer- oder Regeleinrichtung 4 kann darüber hinaus eine Software enthalten, welche den beschriebenen Steuer- oder Regelprozess ausführt, wenn die Software auf einem Mikroprozessor ausgeführt wird.

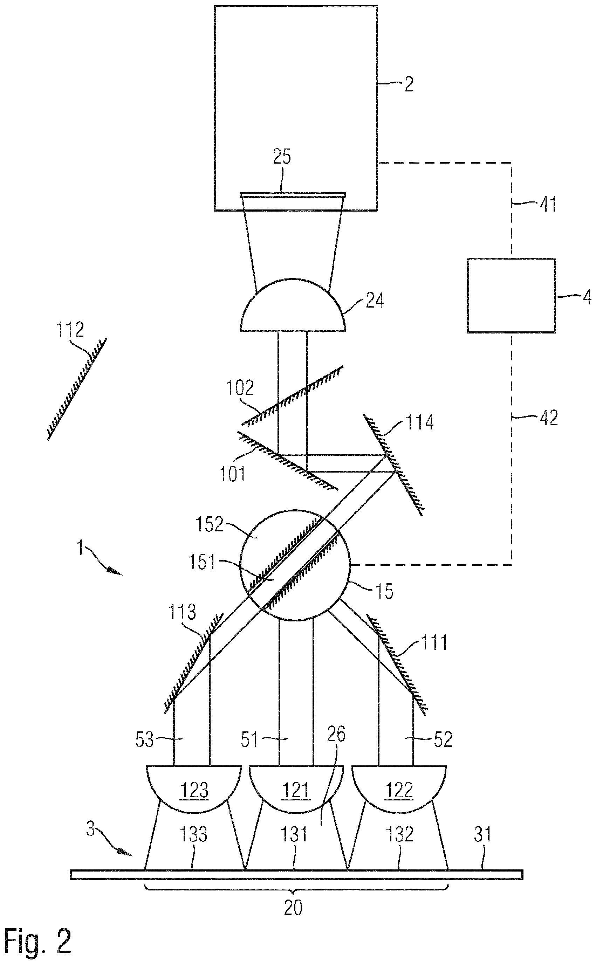

Figur 2 zeigt eine zweite Ausführungsform der Erfindung. Gleiche Bestandteile der Erfindung sind mit gleichen Bezugszeichen bezeichnet, sodass sich die nachfolgende Beschreibung auf die wesentlichen Unterschiede der Erfindung beschränkt.

Wie in Figur 2 ersichtlich ist, ist statt drei Blenden 161, 162 und 163 nur eine einzige Schlitzblende 15 im Einsatz. Die Schlitzblende 15 besteht aus einer Scheibe, einer Kugel oder einem Zylinder als Grundkörper 152, welcher ein opakes Material enthält oder daraus besteht. In den Grundkörper 152 ist eine Bohrung 151 angebracht, deren Durchmesser ausreichend ist, um Licht vom dritten Spiegel 113 zum vierten Spiegel 114 zu transmittieren.

Bei Betrieb der Vorrichtung 1 rotiert die Schlitzblende 15 um eine Achse, welche in etwa senkrecht zur Zeichenebene verläuft. Die Rotationsgeschwindigkeit kann wiederum durch eine Steuer- oder Regeleinrichtung 4 beeinflusst werden.

In der in Figur 2 dargestellten Stellung der Blende 15 wird der dritte Strahlengang 53 freigeschaltet, d. h. die dritte Teilfläche 133 des Sichtfelds 20 wird auf den Sensor 25 abgebildet.

Wenn sich die Blende 15 weiterdreht, wird der dritte Strahlengang 53 unterbrochen, bis die Bohrung 151 in etwa senkrecht steht. In diesem Fall wird der erste Strahlengang 51 durch die beiden als Strahlteiler verwendeten teildurchlässigen Spiegel 101 und 102 hindurch auf das Objektiv 24 und schließlich zum Bildsensor 25 verbunden.

Bei weiterer Rotation der Blende 15 wird schließlich der zweite Strahlengang 52 über den ersten Spiegel 111, den zweiten Spiegel 112 und den zweiten Strahlteiler 102 auf das Objektiv 24 gelenkt, sodass ein Bild des zweiten Teilbereichs 132 erfasst werden kann. Bei Rotation der Blende 15 werden somit zyklisch alle drei Teilflächen des Sichtfelds 20 sequentiell mit dem Bildsensor 25 erfasst.

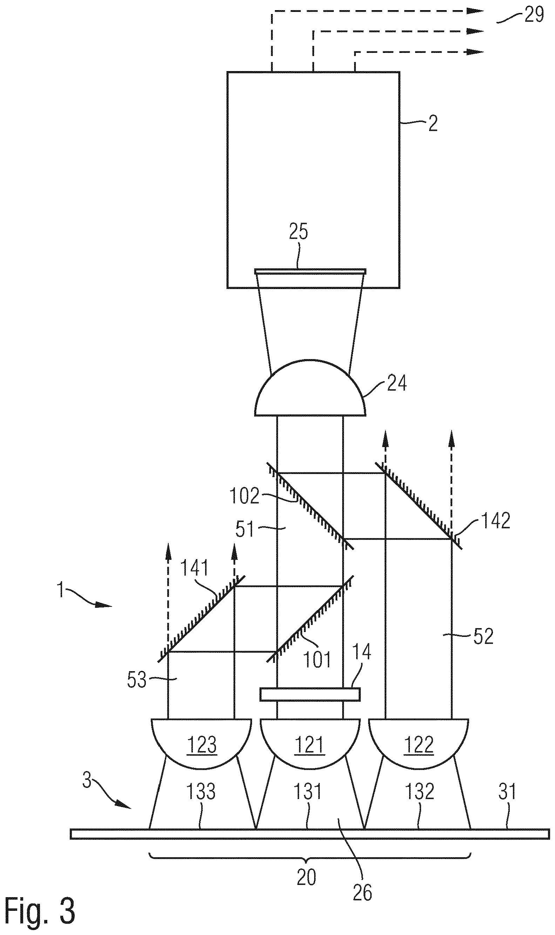

In Figur 3 ist eine dritte Ausführungsform der vorliegenden Erfindung dargestellt. Auch in der dritten Ausführungsform sind gleiche Bestandteile der Erfindung mit gleichen Bezugszeichen dargestellt, sodass sich die nachfolgende Beschreibung auf die wesentlichen Unterschiede beschränkt.

Figur 3 verwendet eine Kamera 2, deren Bildsensor 25 zur Aufnahme von Farbbildern eingerichtet ist. Im dargestellten Ausführungsbeispiel enthalten die einzelnen Bildelemente bzw. Pixel des Bildsensors 25 drei Subpixel, welche jeweils die Intensität in unterschiedlichen Spektralbereichen erfassen. Beispielsweise kann ein Subpixel sensitiv auf rotes Licht ansprechen, ein Subpixel auf grünes Licht und ein Subpixel auf blaues Licht. Drei Subpixel bilden dann ein Pixel des Farbbilds des Bildsensors 25.

Auch die dritte Ausführungsform zeigt drei in etwa parallel verlaufende optische Pfade 51, 52 und 53, welche die Erfassung von drei Teilflächen 131, 132 und 133 des Sichtfelds 20 ermöglichen. Zur Umlenkung der Strahlengänge der seitlichen optischen Pfade 53 und 52 sind in der dargestellten Ausführungsform dichroitische Spiegel 141 und 142 verwendet. Die dichroitischen Spiegel zeichnen sich dadurch aus, dass diese Licht einer vorgebbaren Wellenlänge bzw. eines vorgebbaren Wellenlängenbereichs reflektieren und Licht anderer Wellenlängen transmittieren. Sofern für die Spiegel 141 und 142 unterschiedliche dichroitische Elemente eingesetzt werden, so werden die Teilflächen 132 und 133 in unterschiedlicher Farbe auf dem Bildsensor 25 erscheinen.

Der erste Strahlengang 51, welcher der Abbildung der Teilfläche 131 dient, ist mit einem Transmissionsfilter 14 versehen. In einigen Ausführungsformen der Erfindung transmittiert der Transmissionsfilter 14 einen anderen Wellenlängenbereich, als die reflektierten Wellenlängen der dichroitischen Spiegel 141 und 142. Hierdurch wird erreicht, dass jede der Teilflächen 131, 132 und 133 in einer unterschiedlichen Farbe auf dem Bildsensor 25 abgebildet wird. Hierdurch kann das Signal eines jeden Subpixels genau einer Teilfläche 131, 132 und 133 zugeordnet werden.

Die Kamera 2 weist im dargestellten Ausführungsbeispiel drei Ausgänge 29 auf, an welchen jeweils das Signal einer Subpixelgruppe bereitgestellt wird. Dabei handelt es sich um eine schematische Darstellung, so dass die Anzahl der an einer konkret verwendeten Kamera vorhandenen Datenleitungen größer oder geringer sein kann. Somit können mit der in Figur 3 gezeigten Vorrichtung zwar lediglich Intensitäts- bzw. Graustufenbilder der jeweiligen Spektralbereiche des Sichtfelds 20 erzeugt werden. Durch die gleichzeitige Erfassung sämtlicher Teilflächen des Sichtfelds 20 kann die Bildwiederholrate jedoch größer als in den oben beschriebenen ersten und zweiten Ausführungsformen sein.

Die Auswertung der erfassten Bilder kann erleichtert sein, wenn die Filterelemente 14, 141, 142 jeweils einen Bandpass darstellen, dessen Transmissionswellenlängen in etwa der maximalen Sensitivitäten unterschiedlicher Subpixel des Bildsensors 2 entsprechen. In diesem Fall wird das Bild einer Teilfläche von den roten Subpixeln dargestellt, das Bild einer anderen Teilfläche von den grünen Subpixeln und das Bild der verbleibenden Teilfläche von den blauen Subpixeln.

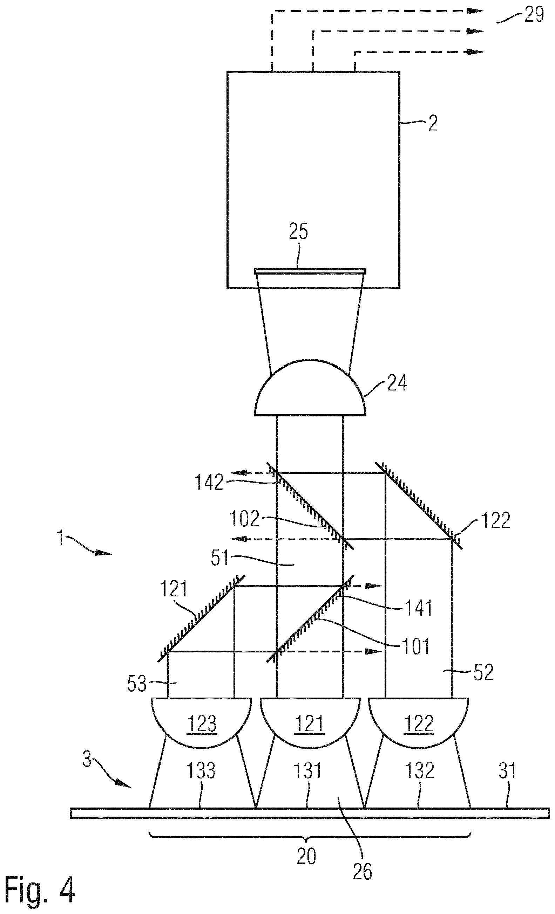

Figur 4 zeigt eine vierte Ausführungsform der vorliegenden Erfindung, welche der in Figur 3 dargestellten dritten Ausführungsform der Erfindung ähnlich ist. Im Unterschied zur dritten Ausführungsform werden dichroitische Elemente 141 und 142 als erster und zweiter Strahlteiler 101 und 102 eingesetzt. Dies führt dazu, dass das Licht der zentral auf der optischen Achse liegenden Teilfläche 131 beide dichroitischen Elemente 141 und 142 durchdringen muss, sodass nur derjenige Wellenlängenbereich transmittiert wird, welcher von keinem der beiden Elemente reflektiert wird. Da das Licht der Teilflächen 132 und 133 jeweils in Reflektion an einem zugeordneten dichroitischen Element 141 bzw. 142 beobachtet wird, ist jeder Teilfläche eindeutig eine Wellenlänge bzw. ein Wellenlängenbereich zugeordnet, wie vorstehend beschrieben.

Somit weist die vierte Ausführungsform der Erfindung den Vorteil auf, dass auf einen zusätzlichen Transmissionsfilter 14 verzichtet werden kann. Die geringere Anzahl optischer Elemente kann dabei die Lichtintensität und/oder die Abbildungsqualität verbessern.

Selbstverständlich ist die Erfindung nicht auf die in den Figuren dargestellte Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Aus-führungsformen, ohne eine Rangfolge festzulegen. Merkmale aus unterschiedlichen Ausführungsformen der Erfindung können jederzeit kombiniert werden, um so weitere Ausführungsformen der Erfindung zu erhalten.

## Patentansprüche

1. Vorrichtung (1) zur Vergrößerung des Sichtfeldes (20) einer Kamera (2) eines Bildverarbeitungssystems, mit einer Kamera (2), welche einen Bildsensor (25) und ein Objektiv (24) aufweist, wobei die Vorrichtung (1) zumindest einen Strahlteiler (101, 102) enthält, welcher dazu eingerichtet ist, dass ein Teil des vom Objektiv erfassten Lichtes durch den Strahlteiler transmittiert und ein Teil des vom Objektiv erfassten Lichtes am Strahlteiler reflektiert wird, so dass eine erste Teilfläche (131) des Sichtfeldes (20) über das Objektiv (24) auf den Bildsensor (2) abgebildet wird und zumindest
eine zweite, Teilfläche (132, 133) des Sichtfeldes (20) mittels zumindest eines ersten Spiegels (111, 112) und das Objektiv (24) auf den Bildsensor (2) abgebildet wird,
wobei im optischen Pfad einer jeden Teilfläche (131, 132, 133) zumindest ein Filterelement (14, 141, 142, 143, 144) angeordnet ist, um die Teilflächen im Wellenlängenmultiplex gleichzeitig zu erfassen, oder zumindest eine schaltbare Blende (15, 161, 162, 163) angeordnet ist, um die Teilflächen sequentiell zu erfassen,
**dadurch gekennzeichnet, dass**
die Kamera (2) einen Zeilensensor enthält und
die zweite Teilfläche des Sichtfeldes (20) neben der ersten Teilfläche des Sichtfeldes (20) liegt, wobei die optischen Pfade in etwa parallel verlaufen und in etwa unter dem gleichen Winkel auf ein zu erfassendes Objekt auftreffen.

2. Vorrichtung nach Anspruch 1, **dadurch gekennzeichnet, dass** der Bildsensor (25) und das Objektiv (24) einen Akzeptanzbereich (26) der Kamera (2) definieren und das Sichtfeld (20) größer ist als der Akzeptanzbereich (26).

3. Vorrichtung nach Anspruch 1 oder 2, **dadurch gekennzeichnet, dass** die erste Teilfläche (131) des Sichtfeldes (20) auf der optischen Achse des Objektivs (24) liegt.

4. Vorrichtung nach einem der Ansprüche 1 bis 3, weiterhin enthaltend einen zweiten Strahlteiler (102, 101), welcher dazu eingerichtet ist, zumindest eine dritte, neben der optischen Achse des Objektivs (24) liegende Teilfläche (133) des Sichtfeldes (20) über zumindest einen zweiten Spiegel (113, 112) und das Objektiv (24) auf den Bildsensor (2) abzubilden.

5. Vorrichtung nach einem der Ansprüche 1 bis 4, **dadurch gekennzeichnet, dass** die zumindest eine Blende (15, 161, 162, 163) ausgewählt ist aus einer rotierenden Schlitzscheibe (15) und/oder einem Zentralverschluss und/oder einem Schlitzverschluss (161, 162, 163).

6. Vorrichtung nach einem der Ansprüche 1 bis 4, **dadurch gekennzeichnet, dass** das zumindest eine Filterelement (14, 141, 142, 143, 144) dazu eingerichtet ist, Licht einer vorgebbaren Wellenlänge bzw. eines Wellenlängenbereichs zu transmittieren und/oder zu reflektieren und/oder zu absorbieren, wobei insbesondere das Filterelement (14, 141, 142, 143, 144) ausgewählt ist aus einem Transmissionsfilter (14) und/oder einem dichroitischen Spiegel (141, 142) und/oder dass die Filterelemente (14, 141, 142) jeweils einen Bandpass oder einen Hochpass oder einen Tiefpass umfassen, dessen Transmissionswellenlängen in etwa der maximalen Sensitivitäten unterschiedlicher Subpixel des Bildsensors (2) entsprechen.

7. Vorrichtung nach einem der Ansprüche 1 bis 6, **dadurch gekennzeichnet, dass** der zumindest eine Strahlteiler (101, 102) einen teildurchlässigen Spiegel enthält oder daraus besteht.

8. Vorrichtung nach einem der Ansprüche 1 bis 7, **dadurch gekennzeichnet, dass** das Sichtfeld (20) 2 bis 10 oder 3 bis 5 mal größer ist als der Akzeptanzbereich (26).

9. Verfahren zur Qualitätssicherung mit einer Kamera (2) eines Bildverarbeitungssystems, wobei die Kamera (2) einen Bildsensor (25) und ein Objektiv (24) aufweist, mit welchem ein Sichtfeld (20) abgebildet wird, **dadurch gekennzeichnet, dass** mit zumindest einem Strahlteiler (101, 102) in einem ersten Verfahrensschritt eine erste Teilfläche (131) des Sichtfeldes (20) über das Objektiv auf den Bildsensor (2) abgebildet wird und in einem zweiten Verfahrensschritt zumindest eine zweite Teilfläche (132, 133) des Sichtfeldes (20) über zumindest einen ersten Spiegel (111, 112, 113, 114) und das Objektiv (24) auf den Bildsensor (25) abgebildet wird, wobei ein Teil des vom Objektiv erfassten Lichtes durch den Strahlteiler (101, 102) transmittiert und ein Teil des vom Objektiv erfassten Lichtes am Strahlteiler (101, 102) reflektiert wird und wobei die ersten und zweiten Teilflächen (131, 132, 133) im Wellenlängenmultiplex oder im Zeitmultiplex erfasst werden und die zweite Teilfläche (132, 133) des Sichtfeldes (20) neben der ersten Teilfläche (131) des Sichtfeldes (20) liegt, wobei die optischen Pfade in etwa parallel verlaufen und in etwa unter dem gleichen Winkel auf ein zu erfassendes Objekt auftreffen, und wobei der Bildsensor (25) als Zeilensensor ausgestaltet ist.

10. Verfahren nach Anspruch 9, **dadurch gekennzeichnet, dass** der Bildsensor (2) und das Objektiv (24) einen Akzeptanzbereich (26) der Kamera (2) definieren und das Sichtfeld (20) größer ist als der Akzeptanzbereich (26)

11. Verfahren nach einem der Ansprüche 9 oder 10, **dadurch gekennzeichnet, dass** jede Teilfläche (132, 133) mit voller Auflösung des Bildsensors erfasst wird.

12. Verfahren nach einem der Ansprüche 9-11, **dadurch gekennzeichnet, dass** das Sichtfeld (20) 2 bis 10 oder 3 bis 5 mal größer ist als der Akzeptanzbereich (26).

13. Verfahren nach einem der Ansprüche 9-12, **dadurch gekennzeichnet, dass** die erste Teilfläche (131) des Sichtfeldes (20) auf der optischen Achse des Objektivs (24) liegt.

## Claims

1. Device (1) for increasing the field of view (20) of a camera (2) of an image processing system, comprising a camera (2), which has an image sensor (25) and a lens (24), the device (1) containing at least one beam splitter (101, 102), which is designed in such a way that some of the light detected by the lens is transmitted through the beam splitter and some of the light detected by the lens is reflected at the beam splitter, so that a first partial area (131) of the field of view (20) is imaged onto the image sensor (2) via the lens (24) and at least a second partial area (132, 133) of the field of view (20) is imaged onto the image sensor (2) by means of at least a first mirror (111, 112) and the lens (24),
at least one filter element (14, 141, 142, 143, 144) being arranged in the optical path of each partial area (131, 132, 133) in order to simultaneously detect the partial areas in the wavelength division multiplex,
or at least one switchable aperture (15, 161, 162, 163) being arranged in order to detect the partial areas sequentially,
**characterized in that**
the camera (2) contains a line sensor and the second partial area of the field of view (20) is disposed adjacent to the first partial area of the field of view (20), the optical paths running approximately parallel and impinging approximately at the same angle on an object to be detected.

2. Device according to claim 1, **characterized in that** the image sensor (25) and the lens (24) define an acceptance range (26) of the camera (2) and the field of view (20) is larger than the acceptance range (26).

3. Device according to claim 1 or 2, **characterized in that** the first partial area (131) of the field of view (20) lies on the optical axis of the lens (24).

4. Device according to any one of claims 1 to 3, further containing a second beam splitter (102, 101) which is configured to image at least a third partial area (133) of the field of view (20) that is disposed adjacent to the optical axis of the lens (24) onto the image sensor (2) via at least a second mirror (113, 112) and the lens (24).

5. Device according to any one of claims 1 to 4, **characterized in that** the at least one aperture (15, 161, 162, 163) is selected from a rotating slotted disk (15) and/or a central shutter and/or a slotted shutter (161, 162, 163).

6. Device according to any one of claims 1 to 4, **characterized in that** the at least one filter element (14, 141, 142, 143, 144) is designed to transmit and/or reflect and/or absorb light of a predeterminable wavelength or wavelength range, in particular the filter element (14, 141, 142, 143, 144) being selected from a transmission filter (14) and/or a dichroic mirror (141, 142), and/or
**in that** the filter elements (14, 141, 142) each comprise a bandpass or a high-pass or a low-pass, the transmission wavelengths of which correspond approximately to the maximum sensitivities of different subpixels of the image sensor (2).

7. Device according to any one of claims 1 to 6, **characterized in that** the at least one beam splitter (101, 102) contains or consists of a partially transparent mirror.

8. Device according to any one of claims 1 to 7, **characterized in that** the field of view (20) is 2 to 10 or 3 to 5 times larger than the acceptance range (26).

9. Method for quality assurance with a camera (2) of an image processing system, the camera (2) including an image sensor (25) and a lens (24) with which a field of view (20) is imaged, **characterized in that**
a first partial area (131) of the field of view (20) is imaged onto the image sensor (2) via the lens using at least one beam splitter (101, 102) in a first method step, and, in a second method step, at least a second partial area (132, 133) of the field of view (20) is imaged onto the image sensor (25) via at least a first mirror (111, 112, 113, 114) and the lens (24), some of the light detected by the lens being transmitted through the beam splitter (101, 102) and some of the light detected by the lens being reflected at the beam splitter (101, 102) and the first and second partial areas (131, 132, 133) being detected in wavelength division multiplex or in time division multiplex and the second partial area (132, 133) of the field of view (20) being disposed adjacent to the first partial area (131) of the field of view (20), the optical paths running approximately parallel and impinging approximately at the same angle on an object to be detected, and the image sensor (25) being designed as a line sensor.

10. Method according to claim 9, **characterized in that** the image sensor (2) and the lens (24) define an acceptance range (26) of the camera (2) and the field of view (20) is larger than the acceptance range (26).

11. Method according to claim 9 or 10, **characterized in that** each partial area (132, 133) is detected with full resolution of the image sensor.

12. Method according to any one of claims 9-11, **characterized in that** the field of view (20) is 2 to 10 or 3 to 5 times larger than the acceptance range (26).

13. Method according to any one of claims 9-12, **characterized in that** the first partial area (131) of the field of view (20) lies on the optical axis of the lens (24).

## Revendications

1. Dispositif (1) d'agrandissement du champ de vision (20) d'une caméra (2) d'un système de traitement d'images, comprenant une caméra (2) qui comporte un capteur d'images (25) et un objectif (24), le dispositif (1) comprenant au moins un diviseur de faisceau (101, 102) qui est conçu pour qu'une partie de la lumière détectée par l'objectif est transmise à travers le diviseur de faisceau et une partie de la lumière détectée par l'objectif est réfléchie par le diviseur de faisceau, de sorte qu'une première surface partielle (131) du champ de vision (20) est reproduite sur le capteur d'images (2) par l'intermédiaire de l'objectif (24), et au moins une deuxième surface partielle (132, 133) du champ de vision (20) est reproduite sur le capteur d'images (2) par l'intermédiaire d'au moins un premier miroir (111, 112) et de l'objectif (24),
dans lequel
au moins un élément filtrant (14, 141, 142, 143, 144) est disposé dans le chemin optique de chaque surface partielle (131, 132, 133), afin de détecter les surfaces partielles simultanément par multiplexage en longueur d'ondes, ou
il est prévu au moins un diaphragme commutable (15, 161, 162, 163) pour détecter les surfaces partielles séquentiellement,
**caractérisé en ce que**
la caméra (2) comprend un capteur linéaire, et
la deuxième surface partielle du champ de vision (20) est située à côté de la première surface partielle du champ de vision (20), les chemins optiques s'étendant approximativement parallèlement et rencontrant un objet à détecter approximativement selon le même angle.

2. Dispositif selon la revendication 1, **caractérisé en ce que** le capteur d'images (25) et l'objectif (24) définissent une zone d'acceptation (26) de la caméra (2), et le champ de vision (20) est plus grand que la zone d'acceptation (26).

3. Dispositif selon la revendication 1 ou 2, **caractérisé en ce que** la première surface partielle (131) du champ de vision (20) est située sur l'axe optique de l'objectif (24).

4. Dispositif selon l'une des revendications 1 à 3, comprenant en outre un deuxième diviseur de faisceau (102, 101) qui est conçu pour reproduire sur le capteur d'images (2) au moins une troisième surface partielle (133) du champ de vision (20), située à côté de l'axe optique de l'objectif (24), par l'intermédiaire d'au moins un deuxième miroir (113, 112) et de l'objectif (24).

5. Dispositif selon l'une des revendications 1 à 4, **caractérisé en ce que** ledit au moins un diaphragme (15, 161, 162, 163) est choisi parmi un disque à fente rotatif (15) et/ou un obturateur central et/ou un obturateur à fente (161, 162, 163).

6. Dispositif selon l'une des revendications 1 à 4, **caractérisé en ce que** ledit au moins un élément filtrant (14, 141, 142, 143, 144) est conçu pour transmettre et/ou réfléchir et/ou absorber de la lumière d'une longueur d'ondes prédéfinissable ou d'une plage de longueurs d'ondes, en particulier, l'élément filtrant (14, 141, 142, 143, 144) étant choisi parmi un filtre de transmission (14) et/ou un miroir dichroïque (141, 142) et/ou **en ce que** les éléments filtrants (14, 141, 142) comprennent chacun un filtre passe-bande ou un filtre passe-haut ou un filtre passe-bas dont les longueurs d'ondes de transmission correspondent approximativement aux sensibilités maximales de différents sous-pixels du capteur d'images (2).

7. Dispositif selon l'une des revendications 1 à 6, **caractérisé en ce que** ledit au moins un diviseur de faisceau (101, 102) comprend ou consiste en un miroir partiellement transparent.

8. Dispositif selon l'une des revendications 1 à 7, **caractérisé en ce que** le champ de vision (20) est 2 à 10 ou 3 à 5 fois plus grand que la zone d'acceptation (26).

9. Procédé d'assurance qualité avec une caméra (2) d'un système de traitement d'images, la caméra (2) comprenant un capteur d'images (25) et un objectif (24) avec lequel un champ de vision (20) est reproduit, **caractérisé en ce que**
dans une première étape du procédé, une première surface partielle (131) du champ de vision (20) est reproduite sur le capteur d'images (2) au moyen d'au moins un diviseur de faisceau (101, 102) par l'intermédiaire de l'objectif, et dans une deuxième étape du procédé, au moins une deuxième surface partielle (132, 133) du champ de vision (20) est reproduite sur le capteur d'images (25) par l'intermédiaire d'au moins un premier miroir (111, 112, 113, 114) et de l'objectif (24),
une partie de la lumière détectée par l'objectif est transmise à travers le diviseur de faisceau (101, 102) et une partie de la lumière détectée par l'objectif est réfléchie par le diviseur de faisceau (101, 102), et les première et deuxième surfaces partielles (131, 132, 133) sont détectées par multiplexage en longueurs d'ondes ou par multiplexage temporel, et
la deuxième surface partielle (132, 133) du champ de vision (20) est située à côté de la première surface partielle (131) du champ de vision (20),
les chemins optiques s'étendent approximativement parallèlement et rencontrent un objet à détecter approximativement selon le même angle, et le capteur d'images (25) est réalisé sous forme de capteur linéaire.

10. Procédé selon la revendication 9, **caractérisé en ce que** le capteur d'images (2) et l'objectif (24) définissent une zone d'acceptation (26) de la caméra (2), et le champ de vision (20) est plus grand que la zone d'acceptation (26).

11. Procédé selon la revendication 9 ou 10, **caractérisé en ce que** chaque surface partielle (132, 133) est détectée avec la pleine résolution du capteur d'images.

12. Procédé selon l'une des revendications 9 à 11, **caractérisé en ce que** le champ de vision (20) est 2 à 10 ou 3 à 5 fois plus grand que la zone d'acceptation (26).

13. Procédé selon l'une des revendications 9 à 12, **caractérisé en ce que** la première surface partielle (131) du champ de vision (20) est située sur l'axe optique de l'objectif (24).
